(19) Europäisches Patentamt
European Patent Office
Office européen des brevets

(11) Publication number: 0 325 863
A2

(12) EUROPEAN PATENT APPLICATION

(21) Application number: 88312322.6

(22) Date of filing: 23.12.88

(51) Int. Cl.4: G01J 1/50 , C09K 9/02 , A61N 5/06 , G03C 1/92

(30) Priority: 28.12.87 US 138328
01.02.88 US 151106

(43) Date of publication of application:
02.08.89 Bulletin 89/31

(84) Designated Contracting States:
AT BE CH DE ES FR GB GR IT LI LU NL SE

(71) Applicant: Depalma, Mark S.
36 Devon Road
Bronxville New York 10708(US)

(72) Inventor: Depalma, Mark S.
36 Devon Road
Bronxville New York 10708(US)

(74) Representative: Crisp, David Norman
D. YOUNG & CO. 10 Staple Inn
London, WC1V 7RD(GB)

# (54) Multi-color ultraviolet radiation measurement device.

(57) The invention provides phototranschromic compositions comprising a photoreactive compound and a color indicator which undergo distinct color changes upon being exposed to actinic radiation. The invention also provides ultraviolet radiation dosimeters comprising such compositions and a method for detecting predetermined levels of exposure to ultraviolet. The dosimeters of the invention may contain a plurality of the phototranschromic compositions, wherein each of the compositions undergoes a distinctive color change upon exposure to a certain predetermined level of ultraviolet radiation. Each color change may be calibrated to a given ultraviolet radiation dosage level which a particular skin type may be safely exposed to.

Figure 3

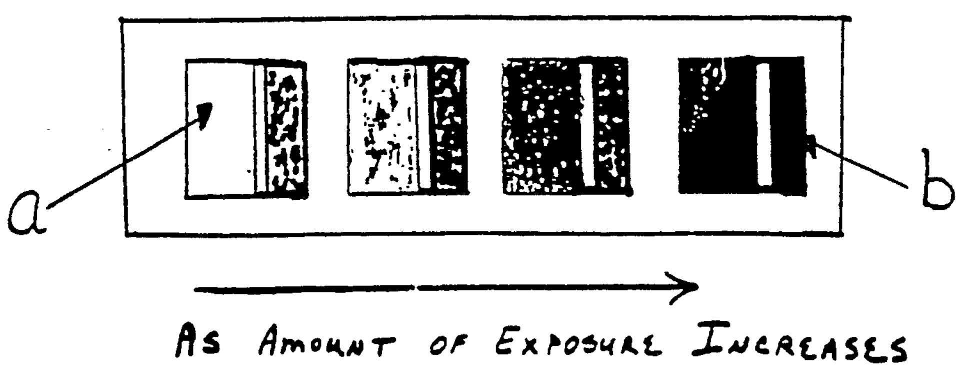


EP 0 325 863 A2

## MULTI-COLOR ULTRAVIOLET RADIATION MEASUREMENT DEVICE

This invention relates to compositions and devices for estimating levels of exposure to actinic radiation, and particularly to devices for quantifying exposure to UV radiation in sunlight and calibrated to be read in terms of standardized sunburn dosage levels.

Much analysis has been done on the data acquired in experimentation on the physiological effects of ultraviolet radiation on humans. From these analyses, conclusions have been drawn and accepted by various groups with respect to tolerable dosage levels of ultraviolet radiation.

Ultraviolet radiation is generally referred to in three energy (or frequency) bands: U.V.C. with wavelengths from 100nm to 290nm, U.V.B with wavelengths from 290nm to 320nm, and U.V.A. with wavelengths from 320nm to 400 nm. The most harmful radiation to humans is in the U.V.C. and U.V.B. bands. The U.V.C. radiation from the sun does not reach the surface of the earth (it is absorbed in the ozone layer.), where solar radiation of wavelengths shorter than 295nm is generally not found.

U.V.A. is currently not found to cause as much of a health hazard to humans as U.V.B. In order to measure the pathogenic capacity of ultraviolet radiation on humans, a method of detection has been developed called the MED or Minimal Erythemal Dosage. The MED is the amount of radiation required to produce a minimally perceptible redness (or MPE, minimum perceptible erythema) of the skin.

Recently, due to concern about deterioration of the ozone (ultraviolet absorbing) layer of the atmosphere, increasing knowledge about the carcinogenic properties of ultraviolet radiation, and increasing longevity and cumulative exposure to the sun, interest has been demonstrated in developing a color changing photochemical system to indicate dosages of ultraviolet radiation.

In the past, various photosensitive compositions have been developed for the detection and indication of ultraviolet radiation, primarily for photographic applications. Examples of such compositions have been recently described in U.S. Patent No. 4,466,941, issued August 21, 1984, and in Zweig et al., Photochemistry and Photobiology, 1976, vol. 24, pp. 543-549, entitled "A Photochemical Mid-Ultraviolet Dosimeter for Practical Use as a Sunburn Dosimeter." These compositions exhibit a change in optical density and/or spectral absorption in response to integral ultraviolet radiation exposure. However, a major limitation of these compositions is that they only turn different shades or intensities of one color and, therefore, devices which incorporate these compositions require either instrumental analysis or diligent comparison to a chart in order to accurately read the amount of ultraviolet exposure. Another drawback of these previously investigated compositions is the complexity of their preparation.

The photosensitive compositions of the prior art typically undergo color changes in response to exposure to ultraviolet radiation due to an intramolecular photo-induced change in a chemical or photoreactive complex contained within the composition. Sometimes sensitizing substances have been mixed into these photosensitive compositions to increase or produce their photosensitivity. The term phototranschromic is used herein to refer generally to compositions that undergo measurable changes in color or optical density when exposed to actinic radiation.

Thus, the prior art describes compounds that change color in response to exposure to ultraviolet radiation and indicate the cumulative energy of such exposure. However, these compounds do not provide a means of indicating to the user what his correct dosage level of ultraviolet radiation is. Moreover, as noted above, since these compounds merely turn different shades of the same color, it is often difficult to tell when a certain exposure level of ultraviolet radiation has been reached.

We have now found it possible:

to provide phototranschromic compositions which undergo distinct color changes upon and proportional to, exposure to actinic radiation, thereby making it easy for an observer to determine the level of exposure to actinic radiation;

to provide phototranschromic compositions containing a photoreactive chemical and a color indicator which undergo an intermolecular reaction upon exposure to actinic radiation resulting in a distinct color change:

to provide a multi-color changing ultraviolet radiation dosimeter which is calibrated to standardized dosage levels of ultraviolet radiation and which displays to the user a color change when such dosage levels have been reached;

to provide a disposable dosimeter which is economical to manufacture and convenient to use;

to provide a disposable ultraviolet radiation dosimeter which changes multiple colors upon exposure to predetermined tolerance levels of ultraviolet radiation for given skin types wherein each color is calibrated to a given skin type dosage level.

## Summary of the Invention

The present invention provides a phototranschromic composition comprising a mixture of a photoreactive compound and a color indicator, preferably two or more color indicators. The photoreactive compound undergoes a molecular transformation upon exposure to a specified quantity of actinic radiation, thereby causing the color indicator to undergo a visually distinct color change. A plurality of color indicators can be used which sequentially undergo visually distinct color changes in response to the molecular transformation of the photoreactive compound.

The invention also provides an ultraviolet radiation dosimeter which undergoes multiple color changes upon exposure to predetermined levels of ultraviolet radiation wherein each color is calibrated to a given skin type dosage level.

The present invention also provides a method for indicating when a subject or an object exposed to actinic radiation has absorbed a predetermined amount of the actinic radiation which comprises exposing the phototranschromic composition of the present invention to the actinic radiation and visually noting when the composition undergoes a color change.

In the present invention, the phototranschromic composition is a mixture of at least two compounds: a photoreactive chemical and a color indicator. The photoreactive chemical undergoes a photochemical reaction to form or eliminate an electric charge transferring agent upon exposure to ultraviolet radiation. In other words, the photoreactive chemical produces an intermolecular electric charge transfer within the phototranschromic composition. The color indicator, in turn, undergoes a change in color upon a charge transfer or a change in the charge transfer potential. The intermolecular interaction of these two different compounds allows the formulation of wide variety of phototranschromic compositions with a wide range of color changes and a great diversity of properties.

The present invention provides a novel method for formulating and preparing phototranschromic compositions which change color upon exposure to radiation, espceially ultraviolet radiation, that is simpler than the methods known in the art. The phototranschromic compositions of the present invention may be designed to exhibit a distinct multi-color change upon exposure to ultraviolet radiation, thereby making it easier for an observer to read devices which incorporate these substances.

## Brief Description of the Drawings

Figures 1 through 5 illustrate various devices for use as ultraviolet radiation dosimeters in accordance with this invention which incorporate a plurality of compartments arranged in various patterns wherein each compartment comprises a different color changing composition of the present invention.

Figure 6 illustrates a device in which there is a signular color changing section.

Section a in each drawing represents the color changing section of the device.

Section b illustrates the reference color or color chart area which indicates dosage level. There may be a plurality of these reference colors on one device to indicate more than one dosage level, or there may be one standard color which when reached also indicates different dosage levels for each color changing section.

## Detailed Description of the Invention

The present invention provides a phototranschromic composition comprising a mixture of a photoreactive compound and a color indicator. Upon exposure to actinic radiation, the photoreactive compound undergoes a molecular transformation thereby inducing an intermolecular charge transfer or changing the internal charge transfer potential of the mixture. Preferably, the molecular transformation is irreversible under ambient conditions (i.e., the transformation may be reversed if the mixture is subjected to extremely high temperatures or extremely strong oxidizing agents). The color indicator which is mixed with the photoreactive compound undergoes a visually distinct color change in response to the excited photoreactive compound thereby changing the color of the mixture. In a preferred embodiment, the color indicator changes color in response to the change in the internal charge transfer potential of the mixture.

In one embodiment of the invention, a plurality of color indicators are mixed with the photoreactive compound. The color indicators are selected so as to produce sequential multiple color changes of the mixture in response to the varying charge transfer potential of the mixture. In other words, the molecular transformation of a portion of the photoreactive compound causes a small change in the internal charge

transfer potential of the mixture. This in turn causes one or more of the color indicators to undergo a visually distinct color change and thereby change the color of the mixture. As additional portions of the photoreactive compound undergo molecular transformation, the internal charge transfer potential of the mixture continues to change causing the indicators to undergo additional color changes thereby change the color of the mixture. In a most preferred embodiment, the color changes of the mixture follow a sequence similar to that of the spectrum of natural white light. For example, violet-blue-green-yellow-orange-red or the reverse sequence.

The photoreactive compounds which can be used in the practice of the invention can be any photoreactive compound which induces an intermolecular charge transfer or which changes the intermolecular charge transfer potential in a mixture with the color indicator. In the case of negative charge (electron) transfer, such substances may be defined as redox or oxidizing and reducing agents. In the case of positive charge (proton) transfer, such substances may be defined as acids and bases. The formation or elimination of these oxidizing and reducing agents or these acids and bases in a mixture changes the internal charge transfer potential of the mixture. Many substances can behave as both redox agents and/or as acids-bases depending upon the surrounding medium. For example, some substances will exhibit acidic behavior by releasing a proton in a protolytic solvent and will accept and electron in a reducing medium. Knowledge of the exact mechanism of charge transfer that a substance undergoes is not always clear or easily determined and is not necessary for the selection of substances for use in the present invention.

The photoreactive compound used in the present invention produces an intermolecular charge transfer or change in charge transfer potential within a given mixture by either forming or deleting a charge transferring agent by means of a photochemically induced reaction. Such photoreactive compounds may be selected from those listed in the literature available on photochemical reactions. For an excellent source of information on photoreactive compounds and their reactions see Calvert, J.H. and Pitts, J.N. Jr., Photochemistry, 1965, John Wiley & Sons, New York the text of which is incorporated herein by reference. Preferably, the photoreactive compound and products thereof will be heat stable to at least a 150° F and will exhibit low visible light absorbency or little visible color or will be selected to enhance the color changes in the color indicator compound.

Substances which are known to undergo proton transfer in protolytic solvents have been selected and tested for use as the photoreactive compound of the subject invention. Especially useful photoreactive compounds are:
2,4,-dinitrobenzaldehyde, which undergoes the transformation

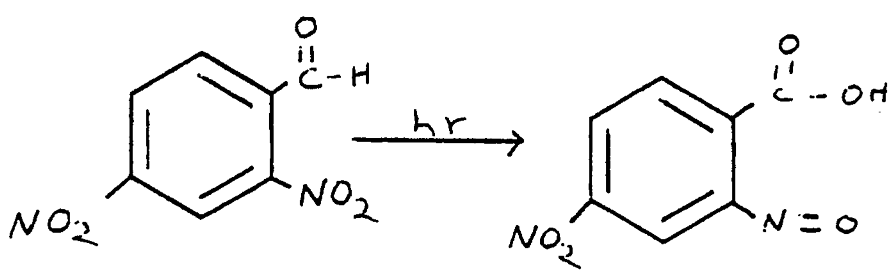

in high yield at a wavelength of about 3130 Angstroms;
2,4,6-trinitrobenzaledhyde, which undergoes the transformation

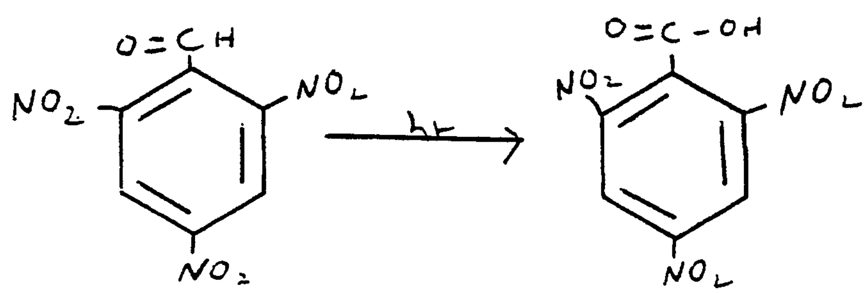

in high yield, at a wavelength of about 3130 Angstroms;
pyruvic acid, which undergoes the transformation

$$CH_3COCO_2H \xrightarrow{h\nu} CH_3CHO + CO_2$$

with a high yield at a wavelength of about 3212 Angstroms;
Benzaldehyde; and Anisaldehyde.

Presently, the most preferred compound for use as the photoreactive component of the present invention is o-nitrobenzaldehyde which undergoes a photoisomerization to o-nitrosobenzoic acid in the presence of ultraviolet radiation as follows:

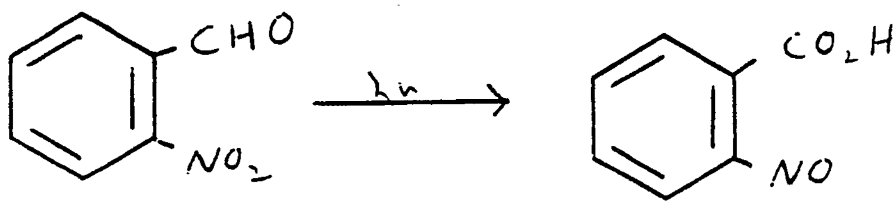

The yield of o-nitrosobenzoic acid from the photoisomerization reaction shown above is greatest at wavelengths less than 350 nm and cuts off completely at about 400 nm. The erythemal (or burning) response of the human skin occurs most strongly at wavelengths less than about 350 nm. Based on this property, o-nitrobenzaldehyde has been found to be very useful as a photoreactive compound for use in the ultraviolet burn (or sunburn) dosimeter of this invention.

In addition to the photoreactive component, the phototranschromic compositions of the invention also include one or more color indicators which provide visually distinct color change(s) in response to a change in the internal charge transfer potential of the compositions. The color indicator is relatively non-photoreactive compared to the photoreactive compound. The primary source of color of the mixture results from the color indicator(s). There are a wide variety of substances available that undergo a wide variety of color changes that may be used as the color indicator in the practice of the invention. An excellent reference that may be used in the selection of such color indicators is Chemical Indicators, O. Tomicek, Butterworth Scientific Publications, 1951 the text of which is incorporated herein by reference.

Exemplary color indicators include:
Azo indicators, including Tropeolins;
Bisazo indicators;
Nitro indicators, including Nitrophenols;
Pthalein indicators;
Sulfonephthalein indicators;
Analinesulfonephthaleins;
Triphenylmethane dyes;
Benzeins;
Indophenols;
Quinoline dyes;
Azine groups;
Oxazine groups;
Anthraquinone dyes;
Indigo dyes;
Amines;
Indamines; and
Thiazines.

Preferred color indicators are:

| COLOR INDICATOR | FORMULA | KNOWN COLOR CHANGES |
|---|---|---|
| 4'-anilinoazobenzene-m - sulphonic acid, Na salt (Metanil Yellow) | $C_{18}H_{14}N_3O_3SNa$ | red/yellow |
| 4'-phenylaminoazo-benzene-sulphonic acid, Na salt (Tropeolin 00) | $C_{18}H_{14}N_3O_3SNa$ | red/yellow |
| 4'-dimenthylaminoazo-benzene 4-sulphonic acid, Na salt (Methyl Orange) | $C_{14}H_{14}N_3O_3SNa$ | red/yellow |
| 1-napthylaminoazo-benzene (Napthyl Red) | $C_{16}H_{13}N_3$ | red/yellow |
| 4-Dimenthylaminoazo-benzene-2-chloro-4-sulphonic acid | $C_{14}H_{14}O_3N_3ClS$ | red/yellow |
| Diphenyl-4,4'-bis-(2-azo-1-napthylamine)-sulphonic acid (Congo Red) | $C_{32}H_{24}N_6O_6S_2$ | blue/red |

| | | |
|---|---|---|
| o-Nitrophenol | $C_6H_5NO_3$ | colorless/ yellow |
| 1-Naptholophthalein | $C_{28}H_{18}O_4$ | nearly/color-less/greenish blue |
| di-p-dioxydiphenylphthalide (Phenolphthalein) | $C_{20}H_{14}O_4$ | colorless/ purple |
| Benzopurpurin 4B | $C_{34}H_{26}O_6N_6S_2Na$ | blue/red/ colorless |
| Dibromothymoltetrachlorophthalein | | colorless/ blue |
| 4-ethoxy-2'4'-diaminoazo benzene hydrochloride (p-Ethoxychrisoidine HCL) | $C_{14}H_{16}ON_4HCl$ | red/lemon yellow |
| m-cresolsulphonephthalein (m-Cresol purple) | $C_{21}H_{18}O_5S$ | red/yellow purple |
| Thymolsulphonephthalein (Thymol Blue) | $C_{27}H_{30}O_5S$ | red/yellow blue |
| 3,3',5,5'-tetrabromophenol-sulphonephthalein (Bromophenol Blue) | $C_{19}H_{10}O_5Br_4S$ | yellow/purple |
| 3,3'dibromo-5,5' dichloro-phenolsulphonephthalein (Bromochlorophenol Blue) | $C_{19}H_{10}Cl_2Br_2O_5S$ | yellow/purple |
| 3,3',5,5'tetrabromo-m-cresolsulphonephthalein (Bromocresol Green) | $C_{21}H_{14}O_5Br_4S$ | violet/ yellow/blue |
| 5,5'-dibromo-o-cresol-sulphonethalein (Bromocresol Purple) | $C_{21}H_{16}O_5Br_2S$ | yellow-violet/purple |
| 3,3'-dibromothymol sulphonephthalein Na Salt (Bromothymol Blue Na Salt) | $C_{27}H_{28}O_5Br_2SNa$ | violet/ yellow/blue |
| p-xylenolsuphonephthalein (Xylenol Blue) | $C_{23}H_{22}O_5S$ | red/yellow/ blue |
| s-diethyl-p-amino-oxy-disulpho-dimethylfuchsonimonium (internal sulphate) (Xylene Cyanole FF) | | pink/yellow blue |

| | | |
|---|---|---|
| Phenolbenzein | $C_{19}H_{14}O_2$ | yellow/red |
| 2,4,2',4',2'',4''-hexamethoxytriphenyl carbinol (Hexamethoxy red) | $C_{25}H_{28}O_7$ | reddish/colorless pink |
| Indophenol | $C_{12}H_9O_2N$ | red/blue/colorless |
| Red Cabbage Juice | | red/green |
| Sinalbin (glucoside of white mustard) | | yellow/colorless |

The various photoreactive compounds and color indicators described in this application are available from commercial sources and/or readily synthesized by conventional syntheic organic chemistry.

In certain embodiments of the invention the actinic radiation is ultraviolet (i.e., between about 10nm and 410nm), and preferably, radiation having a wavelength between about 290 and 340nm. In order to regulate the sensitivity of the composition to the ultraviolet radiation, it may be necessary or desirable to incorporate ultraviolet blocking (absorbing or reflecting) substances into the composition to reduce or slow the reaction of the photoreactive compound with incident radiation. Such ultraviolet blocking substances may be added to the photoreactive compound or to the mixture, or may be applied as a covering to the mixture. Compounds that may be used for the purpose of regulating the sensitivity of the composition to ultraviolet radiation include, for example: para-amino benzoic acid (PABA), hydroxybenzophenones, hydroxyphenyl benzotriazole derivatives, salicylic acid esters, and substituted acrylonitriles.

The invention described herein may be embodied in a variety of ways for use in radiation dosimtry. The phototranschromic composition may be produced in liquid form or in solid form. If the composition is produced in liquid form with the preferred photoreactive compounds and color indicators listed hereinabove, the ratio of the photoreactive compound to color indicators is recommended to be from about 1:10 to about 1:1 on a molecular concentration basis. If the phototranschromic composition is produced in a solid form with the preferred photoreactive compounds and color indicators, the ratio of the photoreactive compound to color indicators is preferably from about 1:2 to about 10:1 on a molecular concentration basis. Of course, it will be understood by those skilled in the art that these ratios may vary especailly with color indicators that undergo either very intense or very mild color changes in response to the photoreactive compound.

It is contemplated that the phototranschromic compositions of the present invention may be incorporated into a dosimeter device for indicating a predetermined amount of actinic radiation. Such a device comprises the phototranschromic composition and a containment material. The containment or carrier material may be used to provide a protective barrier or to add structural stability to the composition. Suitable materials are those which transmit visible light (about 400 to 700nm) well so that the color of the phototranschromic composition may be clearly viewed. Some substances that may be useful as the containment material include: glass and other silicates; plastics such as, but not limited to, polyvinyls, polyolefins, and polyacrylates; water-insoluble polymers; and water soluble polymers such as but not limited to, polyvinyl alcohol, cellulose derivatives (i.e. methyl cellulose), and proteins such as albumins and various gelatins.

The phototranschromic composition may be dissolved and/or dispersed in the containment material, or it may be coated on or enclosed within a barrier of containment material. Such a barrier could be formed in a wide range of thickness, depending on the strength required of the barrier and the physical and optical properties of the material. For example, a container for the phototranschromic composition could be made from extruded plastic tubing with a wall thickness of 0.25 inches or more, or the phototranschromic composition could be microencapuslated using modern microencapsulation techniques to create capsules as small as 20 microns or less.

In embodiments where the actinic radiation is ultraviolet radiation, the containment material may also contain an ultraviolet blocking substance of the type described hereinabove. Alternatively, the ultraviolet blocking substance may coat or cover the containment material and the phototranschromic composition.

The dosimeter device of the subject invention may be produced in a variety of ways. For instance,

when the phototranschromic composition is in a liquid form, it may be encapsulated in a tube and used as a bracelet, anklet or necklace so that it may be carried on the body of a subject that is exposed to ultraviolet radiation from the sun. The device may also be in the form of a film, bandage or packet which incorporates the composition. The film, bandage or packet may further comprise an adhesive back so that it can be attached to the body or clothing of the user.

In certain embodiments, the dosimeter device comprises a plurality of phototranschromic compositions wherein each composition is the same or different from the other compositions of the device. The compositions may vary in the type of photoreactive compound or color indicator, or in concentrations thereof. In addition, one or more of the compositions may comprise a blocking agent and the concentration of the blocking agent may vary in each composition. Preferably, the device has multiple compartments (e.g., 2 to 10 compartments) wherein each compartment contains a different phototranschromic composition which undergoes a color change in response to a respective predetermined level of energy absorbency. In a preferred embodiment, the respective predetermined levels of energy absorbency correspond to the erythemal response levels of standardized skin types. Hence, the invention provides a dosimeter device having a plurality of compartments, each containing a different phototranschromic composition which changes color after exposure to a predetermined level of radiation that corresponds to the recommended safe dosage of radiation for a standardized skin type.

The invention further provides a method for indicating when a subject or an object exposed to actinic radiation has absorbed a predetermined amount of the actinic radiation. The method comprises exposing the phototranschromic composition or the dosimeter device of the invention to the actinic radiation and visually noting when the composition undergoes a color change. In the preferred embodiment, the actinic radiation is ultraviolet radiation and the subject is a human subject.

An especially useful method for making a device of the present invention comprises mixing the phototranschromic composition with the containment material to form a homogeneous mixture and casting the mixture into the desired device.

In another embodiment of the invention, dosimeters are provided which are calibrated to standardized dosage levels of actinic radiation, especially ultraviolet radiation. The efficiency of ultraviolet radiant energy to produce erythema varies with wavelength. In normal human skin, maximal erythemal efficiency is produced by a wavelength of 296.7nm. The E-Viton has been established as a unit and standardized by the Illuminating Engineering Society and the International Commission on Illumination as the radiant flux which will produce an erythema effect equivalent to 10 uW of 296.7nm of radiation. The unit of flux over a given area 1E-Viton/$cm^2$ is called the Finsen and, in terms of work, Finsen-sec (1E-Viton - sec/$cm^2$) is used. (Finsen-secs are proportional to the total radiation exposure and can be converted to the total joules for given light sources.)

Humans vary widely from individual to individual in the amount of erythemal energy (finsen-sec) required to produce an MED. In and effort to establish standards for the safety, effectiveness, and labelling for over the counter sunscreen products, the FDA proposed a ruling in 1978 that defines six skin types. These are shown as follows:

| Skin Type | Sunburn and Tanning History | Recommended Sun Protection Factor (SPF) |
|---|---|---|
| I | Always burns easily Never tans (sensitive) | 8 or more |
| II | Always burns easily; tans minimally (sensitive) | 6 to 7 |
| III | Burns moderately; tans gradually (light brown) (normal) | 4 to 5 |
| IV | Burns minimally; always tans well (moderate brown) (normal) | 2 to 3 |
| V | Rarely burns, tans profusely (dark brown) (insensitive) | 2 |
| VI | Never burns; deeply pigmented (insensitive) | None indicated |

These are based on the first 30 to 45 minutes of sun exposure after winter season or unexposured skin.

From the recommended Sun Protection Factor (SPF) for each skin type, the relative sensitivity of each skin type can be calculated as shown here:

| Skin Type | Relative Sensitivities |
|---|---|
| I | 2 or more |
| II | 1.5 |
| III | 1 |
| IV | 0.75 |
| V | 0.5 |
| VI | 0.25 to 0.06 lowest measured |

Researchers agree that 1 MED in normal skin (type III) requires 20 to 30MJ/cm$^2$ erythemal energy (2000-3000 FINSEN-SEC). Therefore for skin types we may calculate:

| Skin Type | 1 MED Dosage (in FINSEN-SEC) |
|---|---|
| I | 1000-1500 |
| II | 1500-2250 |
| III | 2000-3000 |
| IV | 2500-3750 |
| V | 4000-6000 |
| VI | 8000-12,000 |

For the purpose of generating real tanning (melanogenesis), with a slight redness (no strong discomfort) Pathack et al. and others report a minimum requirement of 2 MED. Therefore we can calculate:

| Skin Type | Safe tanning dosage (slight redness) (in FINSEN-SEC) |
|---|---|
| I | 2000-3000 |
| II | 3000-4500 |
| III | 4000-6000 |
| IV | 5000-7500 |
| V | 8000-12,000 |
| VI | 16,000-24,000 |

Luckiesh and others report 5.0 MED for painful sunburn and 10.0 MED for blistering burns. Therefore we may calculate for each skin type I - VI:

| | Painful burn Dosage (in FINSEN-SEC) | Blistering Burn Dosage (in FINSEN-SEC) |
|---|---|---|
| I | 5,000-7500 | 10,000-15,000 |
| II | 7,500-11,250 | 15,000-22,500 |
| III | 10,000-15,000 | 20,000-30,000 |
| IV | 12,500-18,750 | 25,000-37,500 |
| V | 20,000-30,000 | 40,000-60,000 |
| VI | 40,000-60,000 | 80,000-120,000 |

The photodosimeters of the present invention are intended to be used primarily as protective devices, and therefore the lowest values have been selected (to minimize risk of overexposure) for each of the estimated dosages in calibrating the dosimeter devices described in Examples 3 through 8.

Dosage levels may also be similarly determined for pathological conditions, such as those produced by various photosensitizing chemicals (found in internally and externally applied drugs and cosmetics).

Dosimeter devices according to the invention which change colors similarly to the sequence of colors in the natural spectrum of white light (to provide a mnemonic for the user) is shown in Figures 1 through 3. A

preferred basic sequence is shown below:

| Safe Dosage for Skin Type | Color |
|---|---|
| I | Blue-Aqua or Green |
| II | Green or Greenish |
| III | Yellow |
| IV | Light Orange |
| V | Med Orange |
| VI | Red or Dark Orange |

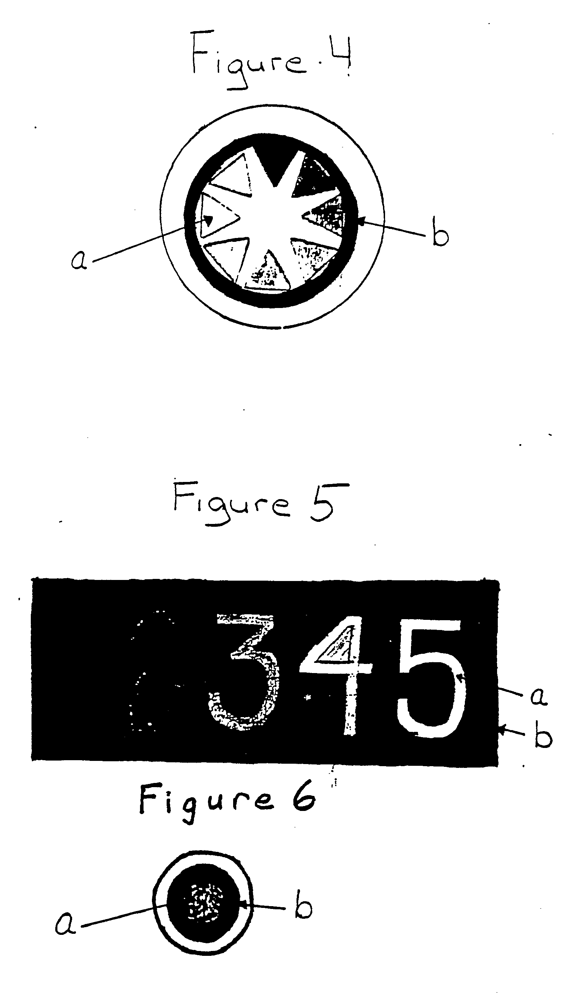

Devices could also be designed to exhibit one or several color changes to indicate different dosage levels for one skin type. Devices may also be designed that are compartmentalized so that each compartment indicates either varying dosage levels for separate skin types or varying dosage levels for one skin type. On each device, a color or color chart reference may be printed to indicate dosage level(s) (as shown in Figures 1 through 6).

The devices should be covered (by coating, lamination, containment etc.) with a shielding substance that is impervious or resistant to the solvents (water soluble and insoluble) used in sunscreen formulations that are used as topical applications for the human body (such as those listed in Example 8). Some substances that may be useful to provide such shielding include, but should not be limited to: glass and other silicates; plastics such as polyvinyls, polyolefins and polyacrylates.

The present invention is further illustrated in the examples which follow. These examples are set forth to aid in an understanding of the invention but are not intended to, and should not be construed to, limit in any way the invention as set forth in the claims which follow thereafter.

## Example 1

### A phototranschromic solution

1. Prepare a solution of deionized water saturated with o-nitrobenzaldehyde. This can be done by heating the water to 90°C and stirring until the o-nitrobenzaldehyde ceases to dissolve. The container should be closed due to the fact that o-nitrobenzaldehyde is volatile with steam.

2. Stir into the solution prepared in step (1) a red color forming indicator with a pH transition range in water of approximately 3-5, such as Hexamethoxy Red, Methyl Orange, or p-Ethoxychrisoidine HCL. The amount should be determined by the required color intensity of red, i.e., a color intensity that can be detected visually.

3. Add dilute ammonium hydroxide to the solution prepared in step (2), until a pH of 8.0 is reached.

4. Stir into the solution prepared in step (3), Bromothymol Blue Sodium Salt in an amount determined to produce the required color intensity of blue. Re-adjust the pH of the solution to 8.0 if necessary.

5. The resulting solution should be enclosed to prevent evaporation of ammonia and shielded from ultraviolet light until ready for use. The resulting solution undergoes a color change BLUE-GREEN-YELLOW-RED when exposed to ultraviolet radiation.

## Example 2

### A solid phototranschromic material

1. Prepare an ink, coating, or casting solution with at least 10% by volume of ethyl alcohol as a solvent and soluble resins (such an ink is manufactured by Specialty Ink Company, as Aero Brand Ink). One such solution may be prepared by mixing approximately 10% by volume ethyl alcohol, 70% by volume ethyl acetate, 10% by volume polyvinyl acetate, and 10% by volume polymethylmethacrylate.

2. To the solution prepared in step (1), add o-Nitrobenzaledhyde in an amount from 1% to 20% of the total weight of the solution. The exact amount depends upon the solvent mixture, the resin(s) used, and the color indicator(s) selected.

3. Adding Methyl Orange-Xylene Cyanole to the solution prepare in step (2) (in an amount determined by the required color intensity) will produce a solution which upon drying will display a color change from GREEN to RED when exposed to mid-ultraviolet radiation.

4. Adding Bromophenol Blue (in an amount determined by the required color intensity) and ammonia to the solution prepared in step (2) so as to obtain a BLUE color of the solution and allowing the solution to dry will produce an ink which displays a color change from BLUE to GREEN upon exposure to mid-ultraviolet radiation.

5. Adding Meta Methyl Red (in an amount determined by the required color intensity) and ammonia to the solution prepared in step (2) so as to obtain a YELLOW color will produce an ink which displays a color change from YELLOW to RED.

6. In order to decrease the sensitivity of the samples prepared in steps (3) through (5) an ultraviolet absorbing compound such as 2,2,4,4-Tetrahydroxy benzophenone may be added to the solutions prepared in steps (3) through (5) or it may be added to another plastic solution such as that prepared in step (1) and applied as a top coat by roller, sprayer, etc., over layers of the material prepared in steps (3) through (5).

7. Preparing the phototranschromic composition of the present invention in solid form as described in the steps above allows one to create a wide variety of multi-color changing samples by layering the types of materials prepared in steps (3) through (5). Ultraviolet absorbing compounds can be added to specific layers or interleaving layers to regulate the rate of change of specific colors. In this manner, a color change following that of the liquid sample described in Example 1, i.e. BLUE - GREEN - YELLOW - ORANGE - RED, could be duplicated.

Example 3

A liquid phototranschromic composition solution is prepared in accordance with Example 1 and is calibrated to change a different color upon reaching the energy level corresponding to the melanogenic safe dosage (as calculated above) for each FDA recognized skin type following below:

1. Preparation of color indicator solution:

a) Prepare 200 milliliters of a 50/50% by volume ethanol/deionized water solution.

b) Add the following color indicators to the solution prepared in step (a) and stir well:

0.03 grams of Bromophenol Blue; 0.10 grams of Bromocresol Green.

0.13 grams of Bromocresol Purple; 0.21 grams of Methyl Red.

2. To prepare 200 milliliters of photoreactive solution:

a) Prepare 200 milliliters of a $5.3 \times 10^{-4}$ (by volume at room temperature 20°C) Ammonium Hydroxide/Deionized water solution.

b) To the solution prepared in step (a) add 0.10 grams of o-nitrobenzaldehyde and stir for approximately three hours at room temperature.

3. Add 10 milliliters of the color indicator solution prepared in step 1 to the 200 milliliters of solution prepared in step 2 and mix. (Solution should turn a dark blue).

4. Add 0.030 grams of 2,2,4,4,-tetrahydroxy benzophenone (sold as D-50 by BASF Co.) and mix.

5. Place the solution prepared in step 4 into 1/4" inner diameter transparent flexible vinyl tubing (with no U.V absorbing material in the plastic); seal the ends.

When the above prepared tubules are exposed to natural sunlight the following color changes occur:

Recommended Melanogenic Safe Dosage

| For skin type | Color of Tubule | Safe tanning dosage (slight redness)(in FINSEN-SEC) |
|---|---|---|
| I | Aqua | 2000-3000 |
| II | Green | 3000-4500 |
| III | Greenish Yellow | 4000-6000 |
| IV | Yellow | 5000-7500 |
| V | Orange | 8000-12,000 |
| VI | Red | 16,000-24,000 |

Example 4

place the solution prepared in Step (4) of Example 3 in 1/4" inner diameter flexible transparent vinyl tubing with a wall thickness of 0.050" and 0.1% by weight of 2 (2′ -hydroxy -5′- methylphenyl) benzotriazole (sold as TINUVIN P by Ciba Geigy) added to the vinyl compound before extrusion. Sealed tubules prepared in this manner exhibit the same results as those of Example 3.

Example 5

In order to prepare a phototranschromic compound in solid form according to Example 2, the procedure is a follows:

1. To 22.2 ml of Butyrolactone add 14.74 grams of a medium-low molecular weight vinyl chloride - vinyl acetate copolymer (such as VMCA manufactured by Union Carbide) and stir will until VMCA is completely dissolved.

2. To the solution prepared in step 1 add 10 ml of Butyl Acetate, 1.64 grams of o-nitrobenzaldehyde, 0.08 grams of Bromophenol Blue and mix.

3. To the solution prepared in step 2, add 0.28 grams of Ammonium Valerate or enough to make the solution turn dark purple or black.

(Although the solution can be used at this stage, ideally it should be allowed to sit for several days to one month so that the viscosity stabilizes).

4. Apply the solution to a white vinyl substrate by stencilling through a 3mil (thousands of an inch) thick stencil or a 105 Mesh stainless steel screen with a mesh thickness of 6.3mil and 46.9% open area (such as is manufactured by UTZ Enginerring Co. Clifton, N.J.) Allow to dry by air at room temperature for 5 hours or apply low heat (not higher than 110° F) to accelerate the drying time.

5. Laminate the samples prepared in step 4 with a thin, transparent, flexible pressure sensitive film with a coatable surface (such as 3.5mil polyethylene sold by 3M Co).

6. Prepare a solution of VMCA In Butyrolactone with a concentration of 490 grams of VMCA per liter of solution.

7. Add to the solution prepared in step 6, 0.62 grams of D-50 UV absorber per liter of solution. Mix well.

8. Screen or stencil (using the same equipment and technique described in step 4) the solution prepared in step 7 onto the lamination prepared in step 5. Allow to dry. When these samples are exposed to natural sunlight, the following changes occur:

**Recommended Melanogenic Safe Dosage**

| For skin type | Color of Coating | Safe tanning dosage (slight redness)(in FINSEN-SEC) |
|---|---|---|
| I | Yellowish Green | 2000-3000 |
| II | Greenish Yellow | 3000-4500 |
| III | Yellow | 4000-6000 |
| IV | Light Orange | 5000-7500 |
| V | Medium Orange | 8000-12,000 |
| VI | Dark Orange | 16,000-24,000 |

## Example 6

A U.V. dosimeter device may also be designed so that it is compartmentalized such that each compartment changes colorant a rate calibrated to the dosage levels of particular skin type. The compartments or sections could be printed in a variety of designs and arranged in any order such as those shown in figures 1 through 4. For example:

1. To create a section that starts at Aqua and changes to Yellow after exposure to 2 MED level for skin type I. Follow the procedure of Example 5, using a 0.31 grams/liter solution of D-50 instead of 0.62 grams/liter solution to reduce the UV absorber thus increasing the sensitivity of the device.
2. To create a section that starts at Aqua and changes to Yellow after exposure to 2 MED level for skin type II. Follow the procedure of example 5 using a D-50 solution of 0.465 grams/liter instead of 0.62 grams/liter.
3. To create a section that starts at Aqua and changes to Yellow after exposure to 2 MED level for skin type III. Follow the procedure of Example 5.

For all other skin types, note that the rate of change of color of the dosimeter is inversely proportional to the concentration of U.V. absorber.

## Example 7

Any of the dosimeters described in the examples above may be used to measure harmful dosages of one skin type as opposed to safe dosages of multiple skin types. For example:

1 MED for Skin Type V = Dosage for painful sunburn for skin type I.

1 MED for Skin Type VI = Dosage for blistering burn for skin type I.

## Example 8

All of the above described dosimeters may also be used to test the effectiveness of sunscreen applications. For example, the following sunscreen formulations were applied to sections prepared according to Example 5. They were coated on by finger to four separate sections with a coating thick enough to give a slight opacity (1 to 2 mil thick).

| NAME | Active Ingredients | SPF Claimed |
|---|---|---|
| Orange Suntan Gelee Supermarkets Gen. Corp. Woodbridge, N.J. | Octyl Dimethyl PABA 2.25% | 4 |
| Sun Screen Supermarket Gen. Corp. Woodbridge New Jersey | Padimate 0.7%<br>Octyl Salicylate 5%<br>Oxybenzone 2% | 8 |
| Sundown Sunblock Stick Johnson & Johnson Skillen, N.J. | Octyl Dimethyl PABA 7%<br>Oxybenzone 3% | 15 |
| Cancer Garde Eclipse | Octyl P-Dimethyl benzoate 8%<br>Octyl P-Meythoxycinnamate 7.5% | 33 |
| Laboratories Inc. Greenwich, CT. | Titanium Dioxide 5% | |

Results

| Sunscreen Solution Coated | Time to turn from Aqua to Yellow | In terms of MED Skin type III |
|---|---|---|
| None | 35 Minutes | 1 |
| Orange Suntan Gelee S.P.F. 4 | 122.5 Minutes | 3.5 |
| Sun Screen S.P.F. 8 | 280 Minutes | 8 |
| Sundown Sunblock Stick S.P.F. 15 | 805 Minutes | 23 |
| Cancer Garde 33 S.P.F. 33 | 1435 Minutes | 41 |

NOTE:

The protection shown in the results above may not match the S.P.F.'s claimed for the formulations due to variations in film thicknesses resulting from finger coating.

## Claims

1. A phototranschromic composition comprising a photoreactive compound that reacts with actinic radiation; and a color indicator that changes color in response to the photoreactive compound that has been reacted with actinic radiation.

2. A phototranschromic composition according to claim 1 wherein there are a plurality of color indicators that undergo color changes in response to different amounts of the photoreactive compound that have been reacted with the actinic radiation.

3. A phototranschromic composition according to claim 1 or 2, wherein the photoreactive compound undergoes the molecular transformation upon exposure to ultraviolet radiation and causes a change in the internal charge transfer potential of the mixture, and wherein the color indicator undergoes a visually distinct color change in response to the change in the internal charge transfer potential of the mixture.

4. A phototranschromic composition according to claim 1, 2 or 3, wherein the molecular transformation is irreversible.

5. A phototranschromic composition according to any one of claims 1 to 4, wherein the photoreactive compound forms or eliminates an oxidizing or reducing agent upon exposure to ultraviolet radiation.

6. A phototranschromic composition according to any of claims 1 to 5, wherein the photoreactive compound is selected from benzaldehyde or a derivative thereof, anisaldehyde, or pyruvic acid.

7. A phototranschromic composition according to any one of claims 1 to 6, wherein the color indicator selected from an azo color indicator, a tropeolin, a bisazo color indicator, a nitro color indicator, a sulfonepthalein color indicator, an analinesulfonephthalein, a triphenylmethane dye, a benzein, an indophenol, a quinoline dye, an azine group, an oxazine group, an anthraquinone dye, an indigo dye, an indamine, or a thiazine.

8. A phototranschromic composition according to any one of claims 1 to 7 further comprising an ultraviolet blocking substances.

9. A phototranschromic composition according to any one of claims 1 to 8, wherein the composition is a solid and the ratio of the photoreactive compound to the color indicator is from about 1:2 to about 10:1 on a molecular concentration basis.

10. An ultraviolet radiation dosimeter comprising a containment material having a plurality phototranschomic compositions according to claim 7 therein, wherein each phototranschromic composition undergoes a distinctive color change upon exposure to a different level of ultraviolet radiation.

11. An ultraviolet radiation dosimeter according to claim 10 wherein each phototranschromic composition changes color in response to the minimal erythemal dosage (MED) for a different standard skin type.

12. A method for indicating when a person exposed to ultraviolet radiation has absorbed a predetermined amount of the ultraviolet radiation which comprises exposing the ultraviolet radiation dosimeter device of claim 10 to the ultraviolet radiation and visually noting when the composition undergoes a color change.

13. A method for making an ultraviolet radiation dosimeter comprising the steps of forming a plurality of phototranschromic compositions according to claim 1, each of said phototranschromic compositions undergoing a color change upon exposure to a different predetermined amount of ultraviolet radiation, and disposing each of said compositions into discrete locations of a containment material.

14. An ultraviolet radiation dosimeter device comprising a phototranschromic composition and a containment material, said phototranschromic composition undergoing color changes or color intensity changes upon exposure to predetermined levels of ultraviolet radiation, wherein the device is calibrated to standard ultraviolet radiation dosage levels of standard skin types so that a different color change or color intensity change is exhibited corresponding to the standard ultraviolet radiation dosage level for each skin type.

Figure 1

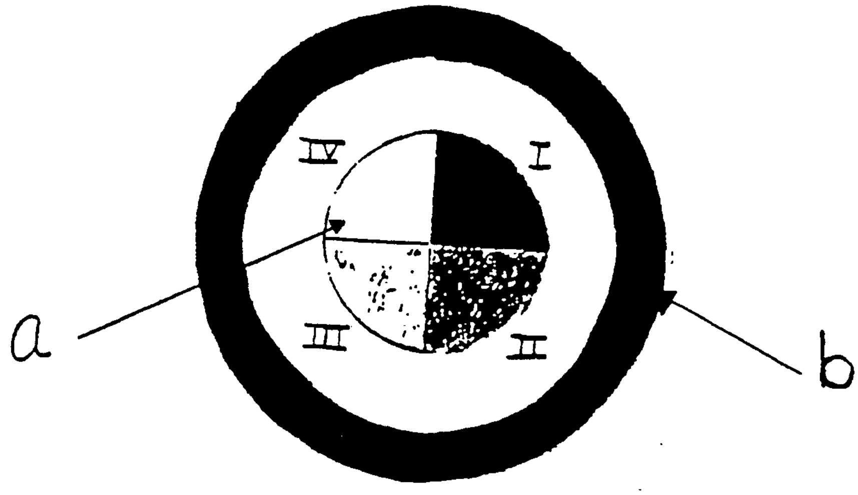


Figure 2

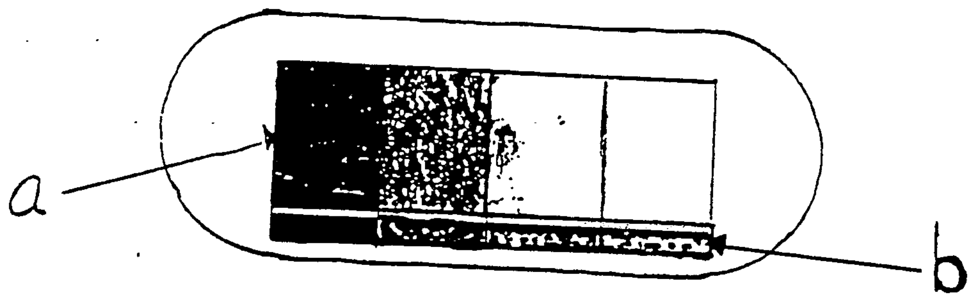


Figure 3

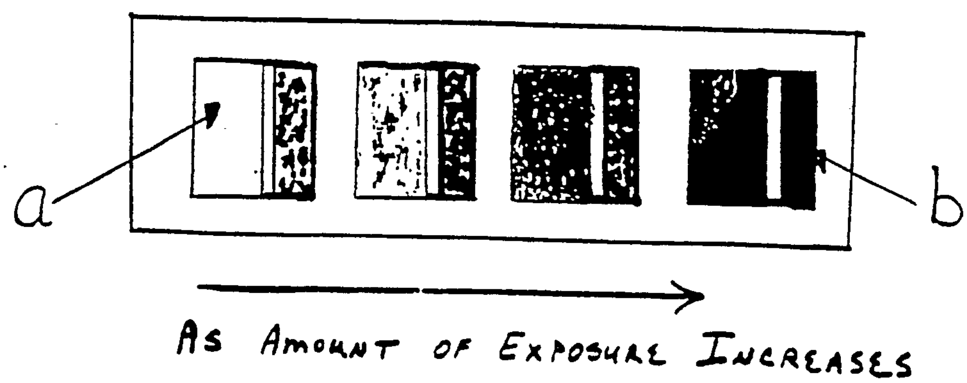

Figure 4

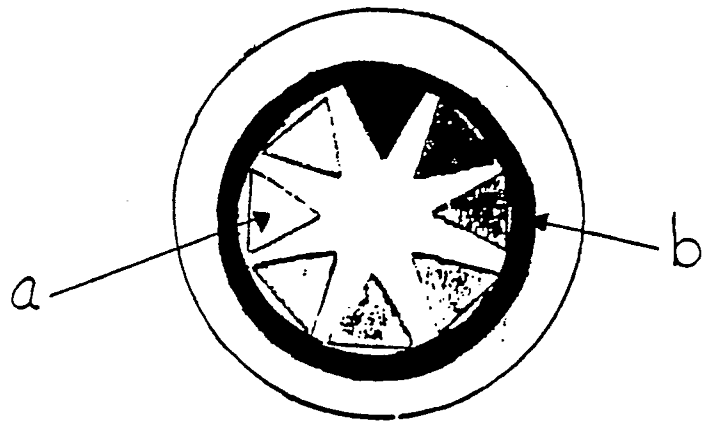


Figure 5

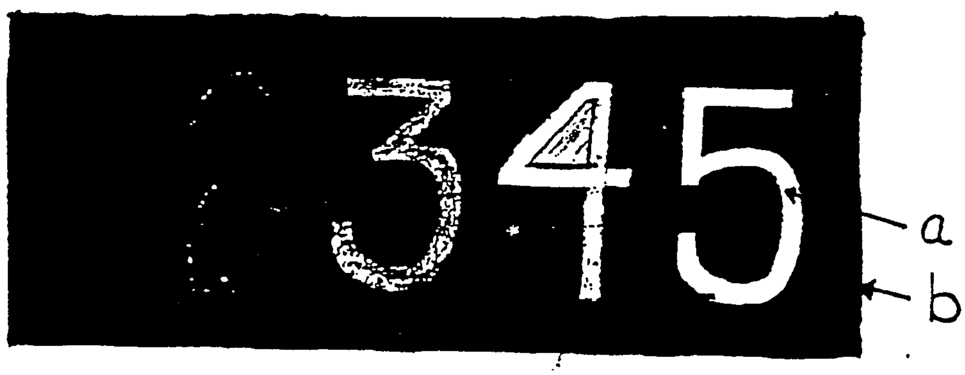


Figure 6